# EUROPEAN PATENT APPLICATION

(11) **EP 4 014 745 A1**
(43) Date of publication of application: **22.06.2022**
(21) Application number: 20215147.8
(22) Date of filing: 17.12.2020
(51) Int. Cl.: A23C 9/152, A23C 3/02, A23L 29/00

(54) **PROCESSED DAIRY-TYPE FOOD PRODUCTS**

(71) Applicant: BK Giulini GmbH, 68526 Ladenburg (DE)
(72) Inventor: Eifel, Julia, 68542 Heddesheim (DE); Heyl, Andreas, 67435 Neustadt / Weinstrasse (DE); Srichuwong, Sathaporn, 69115 Heidelberg (DE); Grahn, Irene, 67071 Ludwigshafen (DE); Voigt, Maximilian, 64625 Bensheim (DE); Sporka, Radovan, 69117 Heidelberg (DE); Travel, Jean-Francois, 53440 Marcillé La Ville (FR); Doerwald, Florencio Zaragoza, 6374 Buochs (CH)
(74) Representative: Hoyng Rokh Monegier B.V.

(57) **Abstract**

The invention relates to a processed dairy-type food product comprising phytic acid salt, the dairy product having a pH between 4.5 and 8, preferably 5 and 8. The dairy-type product can for example be a dairy cheese product, high protein dairy beverage, or a plant based, vegan cheese or beverage. The amount of phytate, calculated as phytic acid, generally is between about 0.05 - 5 wt% in the finished product and provides one or more of the following properties: emulsification, metal-ion sequestering, pH regulating, texture-enhancing, and flavor-improving agents. The phytate can be used as replacement for phosphate additives in food.

## Description

### FIELD OF THE INVENTION

The invention relates to processed dairy-type products, and to methods for producing the same.

### BACKGROUND

Dairy-type products comprise dairy products made with milk products, and also vegan (fully plant based) products like vegan cheese alternatives, vegan protein drinks and the like.

Processed dairy products are products that are composed of at least one dairy product, at least one salt, and generally at least one further component. After or during mixing of these components, generally a heating step is applied.

Processed dairy products, like for example cheese and related products are prepared by heating blends of natural cheese, emulsifying salts, and other ingredients, such as for instance MPC (milk protein concentrate). Emulsifying agents, such as mixtures containing mono-, di-, tri-, or polyphosphate sodium, potassium, or other salts, prevent phase separation into fat and a more hydrophilic protein-rich phase, providing for a homogenous texture, and also help to improve the stability and control the pH of the final product. US 5466477, for instance, discloses a method for preparing processed cheese with the aid of a sodium phosphate solution.

Phosphates may act by complexing calcium ions from caseins, the main proteins in cheese, and by replacing calcium by monovalent or other cations. This enhances the solubility and the deflocculating or peptizing ability of casein, leading to the formation of a more stable emulsion with fat.

Phosphate salts are also beneficial for the processing of other dairy products, to prevent the precipitation of proteins upon heating during processing and for the maintenance of a homogeneous texture and for maintenance of color and flavor. Furthermore, phosphate salts are also used for their pH-buffering capacity.

Heating of dairy products is often required for sterilization or for the removal of water, for instance during the manufacture of evaporated or condensed milk products. During heating the taste and aroma of dairy products may be altered, what can be prevented by the addition of various phosphate salts. WO 2013/116621, for instance, discloses dairy products with improved flavor, fortified by addition of dairy minerals, including phosphate.

The ability of polyphosphates to prevent the precipitation of calcium caseinates by complexation of calcium and thereby to act as dispersing agent is also beneficial for the stabilization and prevention of fouling of UHT protein-rich beverages.

Food-grade phosphates are therefore used in a wide range of dairy applications, including processed cheese, cheese sauces and dips, milk-based beverages (liquid and dry), fermented dairy products, instant puddings and cheesecakes, cream-based soups, ice cream, and dessert toppings

For, example, DSP (disodium phosphate) is added to fluid milk prior to pasteurisation or spray drying to inhibit protein denaturation during heat treatment and to allow efficient protein dispersion upon rehydration. Chocolate milk may benefit from the presence of tetrasodium pyrophosphate (TSPP), which keeps the cocoa in suspension. The purple discoloration of strawberry-flavoured milk may be inhibited by the addition of penta-sodium triphosphate (STPP) to bind the iron. DSP can be used to reduce UHT milk protein coagulation. Long-chain hexa-sodium hexametaphosphate (SHMP) inhibits UHT milk age gelation. Buttermilk and cottage cheese can be prepared via direct acidification with phosphoric acid and this product has a shelf life that is longer than the cultured form. In dairy preparations using alginate as a texturiser, phosphates are useful for controlling calcium release and, consequently, gel setting. Non-dairy creamers frequently use dipotassium phosphate (DKP) to inhibit feathering when the whitener is added to the warm acidic coffee. DSP, TSPP or SHMP may be added to ice cream to prevent churning of the milk fat.

In vegan dairy-type products, phosphate salts are commonly used as stabilizers and/or pH buffering compounds. The addition of between 0.1% and 0.5% of polyphosphates, optionally in combination with other salts such as sodium, potassium, magnesium, or calcium citrate or carbonate is a known strategy to stabilize soy- or almond-based protein beverages. Thus, vegan dairy-type products generally are also considered 'processed'; the processing steps require mixing of different components, heating, emulsification and the like.

Although phosphate salts are commonly used, not all characteristics of the processed products are favourable, and a further improvement of certain characteristics is aimed for. For example, phosphate salts can cause a somewhat metallic taste in dairy-type products. It is therefore an object of the invention, to provide a natural additive, allowing good properties of a processed dairy-type product.

### SUMMARY OF THE INVENTION

One or more of the above described objects are provided with the present invention, which relates in a first aspect to a processed dairy-type food product comprising phytic acid salt, the dairy product having a pH between 4.5 and 8, preferably 5 and 8.

In one preferred embodiment, the processed dairy-type product is a product comprising dairy component; which will be named dairy product. Examples of such dairy products include dairy cheese product, high protein dairy beverage, UHT dairy beverages (flavored or unflavored), or sauces.

In another preferred embodiment, the processed dairy-type product is a plant based, vegan product, such as for example a high protein beverage, vegan beverages, vegan culinary cream and dessert and vegan cheese alternatives.

The invention furthermore relates to a process for preparation of a dairy-type product comprising the steps of providing a protein containing-edible liquid, adding a phytic acid salt product - which has a pH between 5 and 11 as 1 wt% of phytic acid salt product if dissolved in water -, and heating the mixture to provide a processed dairy-type product having a pH between 4.5 and 8. The pH of the processed product can be adjusted to the required pH with acids like HCI or citric acid, or base like NaOH, KOH, sodium citrate etc.

The process of the invention can yield liquid products, but the end product can also be spray dried, like for example resulting in milk powder or non-dairy creamer.

In a further preferred embodiment of the invention, a phytic acid salt solution is used in the process, which comprises an amount about 5-50 wt% phytic acid salt, calculated as phytic acid. Preferably, the phytic aid salt comprises metal ion chosen from Na, K, Mg, Ca, and mixtures thereof, preferably Na, K or mixtures thereof.

In another embodiment, the phytic acid salt can be provided as a dry powder (solid). The phytic acid product can be relatively pure, or a mixture with other components. The phytic acid may be sourced from extracts of bran or other cereals, and may be in admixture with other extracted components.

As used in the present application, the term phytic acid includes both myo-inositol hexa phosphate and a mixture of myo-inositol phosphates that may contain from 6 to 1 phosphate groups, comprising at least 50 wt% of myo-inositol hexa phosphate plus myo-inositol penta phosphate relative to the amount of all myo-inositol phosphates and/or comprising 10 wt% myo inositol hexa phosphate relative to the amount of myo-inositol phosphates. Phytic acid according to the present invention preferably comprises 25 wt% InsP6 relative to the amount of InsP's.

The invention furthermore relates to the use of a phytic acid salt product in the preparation of processed dairy-type products. It is preferred that the phytic acid salt provides one or more of the following properties: emulsification, metal-ion sequestering, pH regulating, increase in whiteness, protein dispersion, texture-enhancing, and flavor and color-improving agents.

### DETAILED DESCRIPTION OF THE INVENTION

A processed dairy-type food product is a food product comprising a protein containing-edible liquid, at least one added salt, and generally one or more further edible components. After or during mixing of these components, generally a heating step is applied. The at least one added salt comprises a phytic acid salt in accordance with the present invention

Suitable processed dairy-type products include dairy-products and vegan (dairy like, fully plant-based) products. In one preferred embodiment, the dairy-type product is a dairy product. In another preferred embodiment, the dairy-type product is a vegan, fully plant based product.

Processed dairy products include products such as processed cheese, cream cheese, cheese powders, cultured dairy products, dips, butter, cream, creamers, sauces, dairy beverages, fortified dairy beverages, high protein dairy beverage, canned milk, dairy dessert compositions, instant pudding, ice cream, frozen desserts, UHT dairy beverages (flavored or unflavored) and long shelf-life dairy products.

Examples of processed cheese include, but are not limited to, process cheese blocks, slices, spreads, sauces, sticks, snacks, and powders.

Cheeses that may be contained in the processed cheese include, but are not limited to, Cheddar, Swiss, Colby, washed curd, enzyme-modified and granular cheese. Other ingredients that may be added to the processed cheese include, but are not limited to, anhydrous milk fat, cream, butter, skimmed milk powder, dehydrated cream, nonfat dry milk, casein, whey, whey protein concentrate, milk protein concentrate, water, acetic acid, vinegar, lactic acid, citric acid, sodium citrate, sodium acetate, sodium lactate, sodium chloride, colorants, spices, flavorants, and preservatives.

It has been surprisingly found that samples of processed cheese produced with different concentrations of phytate exhibit a whiter color than samples produced with a phosphate based melting salt composition. Furthermore, it has been unexpectantly noted that taste in spreadable cheese samples produced with phytate is more neutral and less metallic versus the control

Components of (high protein) dairy beverages include anhydrous milk fat, cream, butter, skimmed milk powder, dehydrated cream, nonfat dry milk, casein, whey, whey protein concentrate, milk protein concentrate, soy protein concentrate, milk proteins that may be concentrated, and/or hydrolysed, and/or decalcified. The dairy component(s) may be lactose-free.

In another preferred embodiment, the processed dairy-type product is a plant based, vegan high protein beverage, vegan beverages (not high protein), vegan culinary cream and dessert and vegan cheese alternatives.

Preferably, the amount of protein in the processed dairy-type product is about 2 wt% or higher, more preferably 3 wt% or higher. Preferably, the amount of protein in the processed dairy-type product is between about 25 wt% lower, more preferably about 20 wt% or lower. Preferably, the amount of protein in the processed dairy-type product is between about 2 - 25 wt%. For example, processed cheese can contain up to 20 wt% protein, but can be also between 6-8 wt%. Generally, dairy beverages contain about 3% protein or higher.

In one embodiment on the invention, products with a solid content of about 20-60% are provided. Such products comprise cheese type products, blocks or sauces. Such products may comprise between about 0.5 - 3.5 wt% phytic acid salt (as acid). On solids, such product comprises generally between 0.5 and 20% phytic acid salt, preferably 1.5 - 10%, even more preferably 2.5 to 9 wt% phytic acid salt (as phytic acid) on solids.

In another preferred embodiment of the invention, beverages are provided with a solid content of between 5-27 %. Such products may comprise between about 0.05-4 wt% phytic acid salt (as phytic acid), preferably about 0.1 to 1 wt%. On solids, this may be an amount of between about 0.15 to 85 wt%, preferably 0.4 - 40 wt%, even more preferably between about 0.4 and 10 wt%.

Preferably, the amount of phytate (phytic acid salt), calculated as phytic acid in the processed dairy-type product is between about 0.05 - 5 wt% in the finished product, preferably between about 0.1 - 2 wt% in the finished product.

Preferably, the amount of phytate (phytic acid salt), calculated as phytic acid in the processed dairy-type product is between about 0.3 - 40 wt% in the finished product calculated on solids (with all water removed), preferably between about 0.3 - 20 wt% in the finished product, and even more preferably 0.5 - 15 wt%.

In a comparative tasting session, it has been surprisingly observed that beverages produced with phytate exhibit a less pronounced protein taste. The protein taste usually associated with this type of beverages often proofs to be a problem regarding consumer acceptability, and an improvement thereof is of significant importance.

An additional advantage is, that the use of phytic acid salts allows a label for food products not to comprise specific declarations relating to phosphates according to national food regulations, therefore, preferably, the processed dairy-type product according the invention does not comprise phosphate salts that require declaration according to food regulations on the label, e.g. E-numbering in Europe. Thus, the processed dairy-type products are preferably devoid of mono-, di-, tri-, or polyphosphates.

The dairy product generally has a pH between 4.5 and 8, preferably 4.5 and 7. More preferably, the pH of the processed dairy-type product is about 5 or higher.

The compositions according to the present invention comprise phytic acid salt. Such salt may act as emulsifier, pH regulator, texture- and flavor-improving agents for dairy and dairy-type products. The dissolved phytic acid salts at a pH between 5 and 10 have buffering capacity because part of the phosphate groups will be protonated, and part will be deprotonated; see for example *Formulation of dynamic buffer capacity for phytic acid* Micha 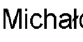 owska-Kaczmarczyk *et al.* in American Journal of Chemistry and Applications 2015; 2(1): 5-9.

Phytic acid (CAS 83-86-3) is the hexaphosphate of inositol (CAS 87-89-8), and occurs naturally in plant tissues, including the seeds of many cereal grains. Salts of phytic acids are called phytates, and mixed calcium magnesium phytates are called phytin (CAS 3615-82-5). The normal mean daily intake of phytates by humans varies between < 300 mg/d in Sweden and Italy to > 2000 mg/d in Guatemala, Nigeria, and India (N.R. Reddy, Chapter 3, Food Phytates, CRC Press, 2002). Some of the beneficial effects of phytate include the prevention or dissolution of kidney stones, the lowering of blood glucose and lipids, antioxidant and anticancer effects (Schlemmer et al., Mol. Nutr. Food Res. 2009, 53, S330-S375).

Some applications of phytic acid salts are described in food applications. For example, US2020/138064 describes the use of phytic acid salts in meat applications, to enhance the water retention of meat during cooking. Graf in JAOCS, vol. 60, no. 11 (1983) pp 1861-1867 has described several aspects of phytic acid, such as its presence in grains and some uses. Lee et al. in Meat Science, Vol. 50, No. 3 (1998) pp 273-283 describes the application of phytic acid in meat processing.

It has been surprisingly found that phytic acid salts show similar properties as the currently used salts of mono-, di-, tri-, or polyphosphoric acid as emulsifying salts and texture- and flavor-improving agents for dairy products. Phytic acid salts can be used in liquid (dissolved) form, but dried salts of such partially neutralized phytic acid solutions are equally applicable.

As used in the present application, the term phytic acid includes both myo-inositol hexa phosphate and a mixture of myo-inositol phosphates that may contain from 6 to 1 phosphate groups, comprising at least 50 wt% of myo-inositol hexa phosphate plus myo-inositol penta phosphate relative to the amount of all myo-inositol phosphates and/or comprising 10 wt% myo inositol hexa phosphate relative to the amount of myo-inositol phosphates. Commercially available phytic acid generally is not pure phytic acid (myo-inositol hexakisphosphate, InsP6), but a mixture of myo-inositol phosphates of hexa-phosphate (InsP6) with one or more of pentakis-, tetrakis-, tris-, bis- and monophosphates (InsP5-InsP1).

Preferably, the amount of InsP6 plus InsP5 in phytic acid is about 70 wt% or more relative to the amount of all myo-inositol phosphates (InsP6-InsP1). The phytic acid preferably comprises 25 wt% InsP6 relative to the amount of InsP's, and preferably about 35 wt% or more of InsP6 relative to the amount of all InsP's.

The amount of the respective myo-inositol phosphates can be determined with LC-MS, like for example using a column Shodex HILICpak VG-50 2D (2.0mm I.D. x 150mm), and as eluent, 0.1M Ammonium carbonate buffer (pH10.0)/CH CN=60/40 with a flow rate of 0.2mL/min, using a detector: ESI-MS (SIM Negative) and a column temp. of 40°C.

Aqueous solutions of phytic acid salts can be prepared by dissolving phytic acid and adding a base. The pH is increased by addition of solid or aqueous solutions of sodium hydroxide, potassium hydroxide, magnesium hydroxide, calcium hydroxide, sodium carbonate, potassium carbonate, magnesium carbonate, calcium carbonate, or mixtures thereof. Preferred base solutions are sodium hydroxide, potassium hydroxide, magnesium hydroxide, sodium carbonate, potassium carbonate, or mixtures thereof. Dried salts of partially neutralized phytic acid solutions are equally applicable and can be prepared by drying a phytic acid salt solution.

In a preferred embodiment of this invention, a source of alkalinity is added to a phytic acid solution to adjust the pH to between 5 and 11, preferably between 6-10. The source can be any of the bases described above.

The pH-adjusted phytic acid solution may also be prepared by dissolving anhydrous or hydrated sodium phytate (e.g., CAS 14306-25-3 (anhydrous)), anhydrous or hydrated potassium phytate (e.g., CAS 7231-21-2 or CAS 129832-03-7), anhydrous or hydrated calcium phytate (e.g., CAS 23183-60-0), anhydrous or hydrated phytin, or mixtures thereof in water, optionally followed by a final pH-adjustment with strong inorganic mineral acids, such as hydrochloric or sulfuric acid, or with organic acids such as citric acid. Further pH adjustments can be made using solid or aqueous solutions of sodium hydroxide, potassium hydroxide, magnesium hydroxide, calcium hydroxide, sodium carbonate, potassium carbonate, magnesium carbonate, calcium carbonate, sodium citrate, potassium citrate, magnesium citrate, calcium citrate, sodium acetate, potassium acetate, magnesium acetate, calcium acetate, or mixtures thereof. Dried salts of such partially neutralized phytic acid solutions are equally applicable.

The phytic acid or phytic acid salts can be relatively pure compounds, like 95% pure or more.

In a preferred embodiment of the present invention, phytic acid is extracted from cereals or other plant components, like for example from rice bran, from other grains or vegetables. A suitable extraction is for example described in US2020/138064. The phytic acid component in such extracts can be 5-95 wt%, preferably 10 wt% or more, more preferably about 20 wt% or more. The upper limit is not critical, but purer phytic acid will be more expensive to make. The extract can be about 80 wt% pure or less.

As indicated above, the phytic acid may be virtually pure InsP6, but may a mixture of InsP6, InsP5 and lower InsP's, wherein generally the amount of the myo-inositol phosphates having 5 or 6 phosphorous groups is 50 wt% or more relative to the myo-inosytol-phosphates. Generally, the amount of InsP6 is about 10 wt% or more; preferably, the amount of InsP6 is about 25 wt% or more, relative to the InsP's. The phytic acid extracted from cereals generally is a mixture of myo-inositol phosphates, and such extracted phytic acid is preferred because it is from a natural source.

In a further preferred embodiment of the invention, a phytic acid salt solution is used in the process, which comprises an amount about 5-50 wt% phytic acid salt, calculated as phytic acid, more preferably between 10-50 wt%. Preferably, the phytic acid salt comprises metal ion chosen from Na, K, Mg, Ca and mixtures thereof, preferably Na, K or mixtures thereof.

The phytic acid salt may be in the form of a powder or granules. The powdery phytic acid salts may have a size up to a few mm, preferably between 0.01-1 mm, and even more preferable between 0.05-0.5 mm. Granular phytic acid salts may be multicrystalline compounds or amorphous particles of up to 4 cm size, although preferably, the size is about 1 cm or less, like for example between 1 mm to 1 cm. The solid product may comprise other components. These components may be added to the phytic acid salt product, or may be remainders from the extraction process, or both.

In a further embodiment of the present invention, the pH-adjusted phytic acid product may also contain additional emulsifying, stabilizing, or texture-enhancing ingredients, commonly used for the manufacture of dairy products, such as for instance processed cheese. These additional ingredients comprise, but are not limited to carrageenan, alginate, xanthan gum, carob bean, cellulose gum, starch, modified starch, and mixtures thereof. It is also possible, but not preferred to use mono-, di-, or triphosphates, such as calcium phosphate in combination with the phytic acid salts solution.

### Processing

The invention furthermore relates to a process for preparation of a dairy-type product comprising the steps of: providing a protein containing edible liquid, adding a phytic acid salt product, which - if dissolved as a 1% solution of phytic acid in water has a pH between 5 and 11, preferably between 6 and 10 -, and heating the mixture to provide a processed dairy-type product having a pH between 4.5 and 8, preferably between 5 and 8.

Conventional processing equipment and methods can be used. The process of the invention can yield liquid products such as beverages or creams, solid products like cheese, but the end product can also be spray dried, like for example resulting in milk powder or creamer.

The invention furthermore relates to the use of a phytic acid salt solution or solid which - if dissolved as a 1% solution in water has a pH between 5 and 11, preferably between 6 and 10 - in the preparation of processed dairy-type products to provide one or more of the following properties: emulsification, metal-ion sequestering, pH regulating, texture-enhancing, and flavor-improving agents.

### EXAMPLES

### Comparative experiment A and Example 1

Processed dairy cheese was generally prepared as follows: All the ingredients were mixed with part of added water and preblended at 1500 rpm for 1 min. Thereafter, the mixture was heated to 80 °C within 3 min at 1500-3000 rpm, and the remainder of water was added. The mixture was heated to 85 °C with steam injection at 3000 rpm, and stirred for an additional 2 min at 3000 rpm. Finally, the mixture was stirred for 8 min at 1500 rpm, vacuum applied, and containers were hotfilled and cooled.

The sodium phytate salt solutions were generally used as about 35 wt% phytic acid in water, adjusted to pH of about 9 with sodium hydroxide. In the receipts, these phytic acid salt solutions were used to replace a conventional melting salt (JOHA^{®} S9) in the preparation of a homogeneous processed cheese of the following composition (% are weight-%). The amount of sodium phytate is calculated as phytic acid, 100% solid. Analysis showed that the phytic acid comprised of more than 90 wt% of hexa and penta phosphates.

| **Ingredient** | **Comparative Exp A** | **Example 1** |
|---|---|---|
| cheddar cheese | 37.0% | 37.0% |
| water | 31.6% | 31.6% |
| steam injection condensate | 13.0% | 13.0% |
| Butter | 8.30% | 8.30% |
| skimmed milk powder medium heat (Codex) | 8.30% | 8.30% |
| JOHA^{®} S9 | 1.70% | |
| sodium phytate | | 1.70% |
| sodium chloride | 0.10% | 0.10% |
| pH corrector (citric acid or sodium citrate) | adjust the pH to 5.3 | adjust the pH to 5.3 |

Results: The phytate-based processed cheese showed very good emulsion and homogeneity, very good stability, whiteness and stronger firming up of the texture, if compared to the traditional melting salts-based processed cheese. A stress test of the phytate-based processed cheese at 30 °C for two weeks showed a good stability and no gas evolution.

### Comparative experiment B and Examples 2-4

Processed cheese was prepared according the general process description of example 1. NaOH (32%) was used as required to reach target pH 5.7.

For texture assessment a Texture Analyser (TA.XT.plus) with a cylindrical measuring geometry is employed using the pre-programmed method "hold-until-time".

| **Ingredient [%]** | **Comp Exp B** | **Example 2** | **Example 3** | **Example 4** |
|---|---|---|---|---|
| Butter | 7.00 | 7.00 | 7.00 | 7.00 |
| Cheddar | 45.00 | 45.00 | 45.00 | 45.00 |
| Skim milk powder | 6.00 | 6.00 | 6.00 | 6.00 |
| JOHA^{®} S9 | 1.70 | | | |
| Sodium phytate | | 1.20 | 1.70 | 2.20 |
| Water | 40.30 | 40.80 | 40.30 | 39.80 |
| Dry matter [%] | 40.9 | 41.3 | 41.5 | 41.7 |

Assessment of the dry matter of cheese samples serves the purpose of verification of processing conditions. During the employed method of processed cheese production, differences in water input could take place as steam injection into the product is controlled manually. Results of dry matter show that water content in all cheese samples is comparable.

| | **Comp Exp B** | **Example 2** | **Example 3** | **Example 4** |
|---|---|---|---|---|
| pH (D+1) | 5.78 | 5.96 | 6.03 | 5.93 |
| pH (D+23, 4°C storage) | 5.71 | 5.94 | 6.05 | 5.94 |

The products produced with phytate started from a slightly higher initial pH at D+1 (this can be easily adjusted by reduced addition of NaOH solution for pH adjustment during processing). All samples exhibit nearly the same pH after a storage time of 21 days at 4°C when compared to the initial value, showing good pH stability.

| | **Comp Exp B** | **Example 2** | **Example 3** | **Example 4** |
|---|---|---|---|---|
| Processability | Easy to process | Easy to process | Easy to process | Easy to process |
| Description Appearance | Cream white, smooth & shiny | White (whiter than control), smooth & shiny | White (whiter than control), smooth & shiny | White (whiter than control), smooth & shiny |
| Description texture | Long texture | Short texture, viscosity comparable to reference | Short texture, higher viscosity than with 1.2% phytic acid salt | Short texture, highest viscosity |
| Description taste | Typical, salty | Less metallic than control, fresh, neutral taste | Less metallic than control, fresh, neutral taste | Less metallic than control, fresh, neutral taste |

It has been surprisingly found that samples of processed cheese produced with different concentrations of phytate exhibit a whiter color than samples produced with a phosphate based melting salt composition. Furthermore, it has been unexpectantly noted that taste in spreadable cheese samples produced with phytate is more neutral and less metallic versus the control.

Texture of samples is comparable. With increasing concentration of phytate viscosity of the samples increases, thereby texture of the cheese can be easily modulated to meet the cheese producers or consumer requirements.

### Comparative experiment C and Example 5

A processed Cheese Bloc with phytate and JOHA^{®} T were prepared as in the former experiments.

| **Ingredient [%]** | **Comp Exp C** | **Example 5** |
|---|---|---|
| Cheddar | 45.00 | 45.00 |
| JOHA^{®} C special | 1.80 | |
| Sodium phytate | | 1.80 |

| Water | To 100% | To 100% |
|---|---|---|
| JOHA^{®} T new | 0.40 | |
| NaOH (32%) required to reach target pH 5,7 | | q.s. |
| JOHA^{®} T new required to reach target pH 5,7 | q.s. | |
| Dry matter [%] | 55.6 | 54.1 |

Assessment of the dry matter of cheese samples serves the purpose of verification of processing conditions. During the employed method of processed cheese production, differences in water input could take place as steam injection into the product is controlled manually. Results of dry matter show that water content in all cheese samples is comparable.

### Results of other assessments are given in the next table

| | **Comp Exp C** | **Example 5** |
|---|---|---|
| pH before adjustment | 5.40 | 5.15 |
| pH after adjustment | 5.70 | 5.79 |
| pH (D+1) | 5.81 | 6.00 |
| pH (D+23, 4°C storage) | 5.59 | 5.91 |
| Description appearance | yellowish | Cream white |
| Description taste | Typical | More neutral |

Analogue to spreadable processed cheese trials products produced with phytate start from a slightly higher initial pH at D+1 (this can be easily adjusted by reduced addition of NaOH solution for pH adjustment during processing). pH drops slightly over storage of 23 days in the refrigerator, for samples containing phosphate pH drops by 0.22 whereas pH in cheese blocs with phytate only decreases by 0.09.

Surprisingly, processed cheese blocs produced with phytate are whiter, more neutral in color, whereas blocs containing phosphate have a more yellowish color. Furthermore, taste is of phytate cheese blocs is more neutral that the phosphate containing control.

Texture assessment shows that after storage of cheese for one week, viscosity increases and texture firms up significantly for both phosphate and phytate samples. What is more important is that viscosity and general behavior of commercial phosphate based melting salt mixtures can be mimicked by use of phytate.

### Comparative experiment D and Examples 6-8

Four high protein dairy beverages have been prepared, with the constituents as in the next table.

| **Ingredient [%]** | **Comp Exp D** | **Example 6** | **Example 7** | **Example 8** |
|---|---|---|---|---|
| Milk (1,5% fat) | 85.53 | 85.53 | 85.53 | 85.53 |
| Micellar Casein | 7.45 | 7.45 | 7.45 | 7.45 |
| Sugar | 4.00 | 4.00 | 4.00 | 4.00 |
| BEKAPLUS^{®} B50 | 0.15 | | | |
| Sodium phytate | | 0.23 | 0.15 | 0.08 |
| Water | 2.87 | 2.79 | 2.87 | 2.94 |

The beverages were prepared as follows: The protein powder was dispersed in milk, and hydrated for 2h. Sugar was added and dissolved, after which either phosphate or phytate was added (the phytate was used as a solution in water, to the formulation with phosphate, an equivalent amount of water was added, as indicated in the last row of the table of ingredients). Thereafter, the pH was adjusted to 6.8, the beverages were sterilized with UHT equipment from Armfield, using indirect heating (141°C, 2s), up-stream homogenization (150/50bar) and sterile filling. In particular this processing step requires a stabilizing substance, like i.e. phosphate for providing process stability: e.g. prevention of fouling during the heating step, as well as final product stability.

The following tables show the assessments of the four beverages.

| **pH** | **Comp Exp D** | **Example 6** | **Example 7** | **Example 8** |
|---|---|---|---|---|
| pH after adjustment | 3.89 | 3.85 | 6.85 | 3.86 |
| pH D+0 | 6.76 | 6.83 | 6.83 | 6.85 |
| pH (D+21, 4°C storage) | 6.69 | 6.77 | 6.75 | 6.77 |
| pH (D+21, RT) | 3.61 | 3.69 | 6.68 | 3.70 |
| pH (D+21, 30°C stress test) | 6.60 | 6.66 | 6.65 | 6.66 |

The pH drops over storage time are comparable for samples containing phosphate and phytate during all temperature conditions. With elevating of storage temperature pH decreases to a higher extend; pH decrease in such beverages is a common phenomenon.

Sediment was determined as follows: Weighing of 14g sample in falcon tubes, centrifugation at 4000rpm for 20min. at 20°C, weighing of sediment. Analysis are conducted in duplicate, average values are provided in the next table

| **assessments** | **Comp Exp D** | **Example 6** | **Example 7** | **Example 8** |
|---|---|---|---|---|
| Processability | Very good | Very good | Very good | Very good |
| Description Appearance | Cream white, homogeneous | Cream white, homogeneous | Cream white, homogeneous | Cream white, homogeneous |
| Description Taste | Smooth texture, typical protein taste | Smooth texture, less pronounced protein taste | Smooth texture, less pronounced protein taste | Smooth texture, less pronounced protein taste |
| Sediment (Initial) | 0.35 | 0.47 | 0.47 | 0.39 |
| Sediment (D+21 4°C storage) | 0.43 | 0.47 | 0.51 | 0.42 |
| Sediment (D+21, RT) | 0.40 | 0.40 | 0.44 | 0.42 |
| Sediment (D+21, 30°C stress test) | 0.34 | 0.42 | 0.45 | 0.40 |

In a comparative tasting session, it has been surprisingly observed that beverages produced with phytate exhibit a less pronounced protein taste. The protein taste usually associated with this type of beverages often proofs to be a problem regarding consumer acceptability. An improvement of taste is therefore definitively an advantage.

Deviations of values for sediment are in the normal range of the inaccuracy of the measuring method. From the values collected so far from the accelerated sedimentation method none of the samples seems prone to produce sediment during prolonged sample storage.

These examples show that use of phytate not only can replace phosphate, but can provide overall stability to an otherwise unstable beverage.

### Examples 9-11 and comparative experiment E

Soy protein dairy-type beverage was prepared with the following ingredients:

| **Ingredient [%]** | **Comp Exp E** | **Example 9** | **Example 10** | **Example 11** |
|---|---|---|---|---|
| Soy Protein Isolate | 5.40 | 5.40 | 5.40 | 5.40 |
| Sugar | 6.00 | 6.00 | 6.00 | 6.00 |
| Carrageenan | 0.01 | 0.01 | 0.01 | 0.01 |
| BEKAPLUS B140 | 0.20 | | | |
| Sodium phytate | | 0.30 | 0.20 | 0.10 |
| Water | 88.39 | 88.29 | 88.39 | 88.49 |

Soy protein isolate was dispersed in water, and hydrated for 1h. Thereafter, sugar was added and dissolved, and carrageenan was added. Stirring was continued for another half hour.

Then, either phosphate or phytate solution was added, and the pH adjusted to pH 7.2. Next, the beverages were UHT processed as follows: Upstream homogenization 200/50bar at 70°C, UHT 141°C for 2sec., cooling, sterile filling.

The beverages with phytate showed virtually the same properties with respect to stability as the beverage with phosphate, The taste was judged as to be improved, with less metallic aftertaste.

## Claims

1. A processed dairy-type food product comprising phytic acid salt, the dairy-type product having a pH between 4.5 and 8, preferably 5 and 8.

2. A processed dairy-type product according to claim 1, wherein the dairy-type product is a dairy product, preferably processed cheese, cream cheese, cheese powders, cream, creamers, sauces, dairy beverages, fortified dairy beverages such as high protein dairy beverage, canned milk, dairy dessert compositions, instant pudding, ice cream, frozen desserts, UHT dairy beverages and long-shelf life dairy products.

3. A processed dairy-type product according to claim 1, wherein the dairy-type product is a plant based, vegan dairy like product, preferably high protein beverage, vegan beverages, vegan culinary cream and dessert, and vegan cheese alternatives.

4. A processed dairy-type product according to any one of claims 1-3, wherein the amount of protein is between about 2 wt% to about 25 wt% in the finished product.

5. A processed dairy-type product according to any one of claims 1-4, wherein the product has a solid content of about 20-60% further comprising between about 0.5 - 3.5 wt% phytic acid salt, calculated as phytic acid, in the finished product.

6. A processed dairy-type product according to any one of claims 1-4, wherein the product has a solid content of about 20-60% further comprising between 0.5 and 20% phytic acid salt, preferably 1.5 - 10%, even more preferably 2.5 to 9 wt% phytic acid salt, calculated as phytic acid, on solids.

7. A processed dairy-type product according to any one of claims 1-4, wherein the product is a beverage and has a solid content of about 5-27% further comprising between about 0.05-4 wt% phytic acid salt, calculated as phytic acid, in the finished product, preferably about 0.1 to 1 wt%.

8. A processed dairy-type product according to any one of claims 1-4, wherein the product is a beverage and has a solid content of about 5-27%, further comprising between about 0.15 to 85 wt% phytic acid salt, calculated as phytic acid, calculated on solids, preferably 0.4 - 40 wt%, even more preferably between about 0.4 and 10 wt%.

9. A processed dairy-type product according to any one of claims 1-4, wherein the amount of phytic acid salt, calculated as phytic acid in the processed dairy-type product is between about 0.05 - 5 wt% in the finished product, preferably between about 0.1 - 2 wt% in the finished product.

10. A processed dairy-type product according to any one of claims 1-4, wherein the amount of phytic acid salt, calculated as phytic acid in the processed dairy-type product is between about 0.3 - 40 wt% in the finished product calculated on solids, preferably between about 0.3 - 20 wt% and even more preferably 0.5 - 15 wt%.

11. A processed dairy-type product according to any one of claims 1-10, wherein the processed dairy-type product does not comprise phosphate salts that require specific declaration according to food regulations, like for example E-numbering in Europe.

12. A process for preparation of a dairy-type product comprising a protein containing edible liquid, adding a phytic acid salt, which when dissolved as a 1% solution in water has a pH between 5 and 11, preferably 5 and 10, and heating the mixture to provide a processed dairy-type product having a pH between 4.5 and 8.

13. Process according to claim 12, wherein the dairy-type product is spray dried.

14. Use of a phytic acid salt product, which when dissolved as a 1% solution in water has a pH between 5 and 11, preferably 6 and 10, in the preparation of processed dairy-type products to provide one or more of the following properties: emulsification, metal-ion sequestering, pH regulating, increase in whiteness, protein dispersion, texture-enhancing, and flavor and color-improving agents.

15. Process or use according to any one of the preceding claims wherein phytic acid is a mixture of myo-inositol phosphates that may contain from 6 to 1 phosphate groups, comprising at least 50 wt% of myo-inositol hexa phosphate plus myo-inositol penta phosphate relative to the amount of all myo-inositol phosphates and/or comprising 10 wt% myo inositol hexa phosphate relative to the amount of myo-inositol phosphates.
